# EUROPÄISCHE PATENTSCHRIFT

(11) **EP 2 411 473 B1**
(45) Veröffentlichungstag und Bekanntmachung des Hinweises auf die Patenterteilung: **20.11.2013**
(21) Anmeldenummer: 10709702.4
(22) Anmeldetag: 18.03.2010
(51) Int. Cl.: C08L 69/00, C08L 33/24, C08L 33/12

(54) **(CO)POLYCARBONATE MIT VERBESSERTEN OPTISCHEN EIGENSCHAFTEN**
(CO)POLYCARBONATES WITH IMPROVED OPTICAL PROPERTIES
(CO)POLYCARBONATES À PROPRIÉTÉS OPTIQUES AMÉLIORÉES

(30) Priorität: 26.03.2009 DE 102009015040
(43) Veröffentlichungstag der Anmeldung: 01.02.2012
(73) Patentinhaber: Bayer Intellectual Property GmbH, 40789 Monheim (DE)
(72) Erfinder: WEHRMANN, Rolf, 47800 Krefeld (DE); HEUER, Helmut Werner, 47829 Krefeld (DE)
(74) Vertreter: BIP Patents
(86) Internationale Anmeldenummer: PCT/EP2010/001714
(87) Internationale Veröffentlichungsnummer: WO 2010/108626

(56) Entgegenhaltungen:
- WO-A1-2007/140100
- US-A- 5 096 968
- US-A1- 2003 173 546

## Beschreibung

Die vorliegende Erfindung betrifft (Co)polycarbonat-Zusammensetzungen und Formmassen, die sich durch verbesserte optische Eigenschaften, gute Fließfähigkeit und hohe Wärmeformbeständigkeit auszeichnen.

(Co)polycarbonate gehören zur Gruppe der technischen Thermoplaste. Sie finden vielseitige Anwendungen im Elektro- und Elektronikbereich, als Gehäusewerkstoff von Leuchten und bei Anwendungen, bei denen sowohl besondere thermische und mechanische Eigenschaften als auch hervorragende optische Eigenschaften gefordert sind, beispielsweise Föhne, Anwendungen im Automobilbereich, Kunststoffabdeckungen, Streuscheiben oder Lichtleitelemente sowie Lampenabdeckungen oder Lampeneinfassungen (bezels).

Bei diesen Anwendungen werden praktisch immer die guten thermischen und mechanischen Eigenschaften wie Vicat-Temperatur (Wärmeformbeständigkeit) und Glastemperatur zwingend benötigt. Gleichzeitig sind hervorragende optische Eigenschaften von höchster Bedeutung. Um eine Wärmeformbeständigkeit zu erzielen, greift man auf spezielle Bisphenole zurück. Eine gleichzeitige Verbesserung der optischen Eigenschaften ist auf diese Weise nicht zu erzielen.

Es ist bekannt, dass Polyacrylate und (Co)polycarbonate in Blends nicht kompatibel sind. Dies äußert sich in einer erhöhten Trübung bis hin zur Opazität. Auch die thermischen und mechanischen Eigenschaften werden negativ beeinflusst.

Es bestand daher die Aufgabe, aromatische (Co)polycarbonate mit verbesserten optischen Eigenschaften zu entwickeln, bei gleich bleibenden Kerneigenschaften, insbesondere den mechanischen und thermischen Eigenschaften.

Überraschenderweise wurde gefunden, dass eine Zusammensetzung enthaltend (Co)polycarbonat und Polymerisate mit speziellen Acrylatstrukturen zu verbesserten optischen Eigenschaften führt. Diese Maßnahme zur gezielten Erhöhung der optischen Eigenschaften, und deren Einstellung und Abhängigkeit vom beigemischten Polymer, war bisher nicht bekannt.

Gegenstand der Erfindung sind Mischungen aus
A) 99,98 bis 99,5 Gew.-Teilen, bevorzugt 99,9 bis 99,7 Gew.-Teilen (bezogen auf die Summe der Komponenten A + B) hochmolekularem, thermoplastischen, aromatischen (Co)polycarbonat mit Molekulargewicht M (Gewichtsmittel) von mindestens 10.000 g·mol⁻¹, vorzugsweise von 20.000 g·mol⁻¹ bis 300.000 g·mol⁻¹, das Struktureinheiten der Formel (I) enthält, 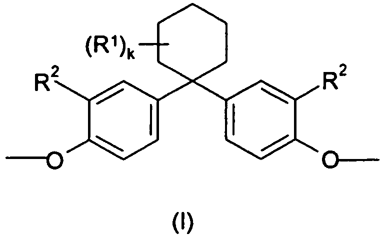 in der
   R¹ und R² für Wasserstoff, C₁-C₄-Alkyl, bevorzugt Methyl,
   k für 0, 1, 2 , 3 oder 4, bevorzugt 2 oder 3, stehen ,
B) 0,02 bis 0,5 Gew.-Teilen, bevorzugt 0,1 bis 0,3 Gew.-Teilen (bezogen auf die Summe der Komponenten A + B) eines oder mehrerer Polyacrylate enthaltend wenigstens eine Struktureinheit der allgemeinen Formel (III): 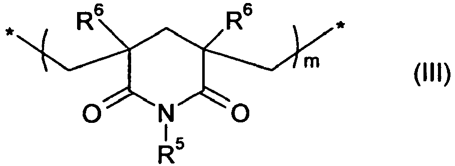
in denen
R⁵ für Wasserstoff, C₁-C₈ Alkyl, bevorzugt Wasserstoff und Methyl, und
R⁶ für Wasserstoff, C₁-C₄ Alkyl, bevorzugt Methyl, stehen
m eine ganze Zahl und durch das Molekulargewicht bestimmt ist
wobei alle Gewichtsteilangaben in der vorliegenden Anmeldung so normiert sind, dass die Summe der Gewichtsteile der Komponenten A + B in der Zusammensetzung 100 ergeben.

Gegebenenfalls können weitere Additive wie UV-Absorber, Entformungshilfsmittel oder Thermostabilisatoren in den Mengen von jeweils 50 bis 5000 Gew.-ppm bezogen auf die Summe der Komponenten A + B enthalten sein.

Aus den erfindungsgemäßen (Co)polycarbonaten und (Co)polycarbonat-Zusammensetzungen hergestellte Spritzgussteile oder Extrudate weisen signifikant verbesserte optische Eigenschaften (Yellowness Index) bei gleichzeitig nahezu unveränderten mechanischen, thermischen und rheologischen Eigenschaften auf. Dies stellt ein wichtiges Kriterium für optische, mechanische und thermische Performance des spritzgegossenen bzw. extrudierten Bauteils dar.

Thermoplastische, aromatische (Co)polycarbonate im Sinne der vorliegenden Erfindung sind sowohl Homopolycarbonate als auch Copolycarbonate bestehend aus verschiedenen Diphenolbausteinen, wobei in der vorliegenden Anmeldung unter dem Begriff (Co)polycarbonat auch Homopolycarbonate aus Diphenolbausteinen der Formel (V) subsummiert werden.

Erfindungsgemäß geeignete aromatische (Co)polycarbonate sind literaturbekannt oder nach literaturbekannten Verfahren herstellbar (zur Herstellung aromatischer (Co)polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396).

Die Herstellung aromatischer (Co)polycarbonate erfolgt z. B. durch Umsetzung von Diphenolen mit Kohlensäurehalogeniden, vorzugsweise Phosgen nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Außer den Diphenolen der Formel (V) 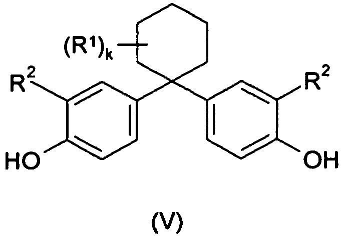 in der
R¹ und R² für Wasserstoff, C₁-C₄-Alkyl, bevorzugt Methyl,
k für 0, 1, 2, 3 oder 4, bevorzugt 2 oder 3, stehen ,
sind für die Herstellung der (Co)polycarbonate geeignete Dihydroxyarylverbindungen solche der Formel (VI) 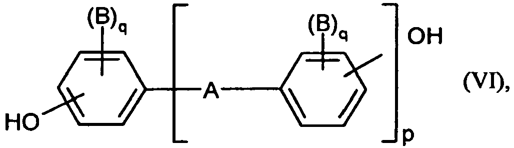 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formeln (VII) oder (VIII) 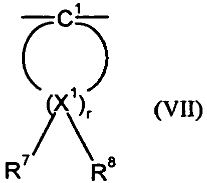 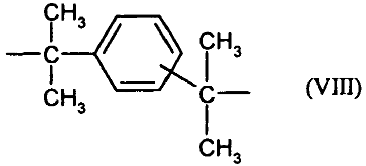
- B: jeweils Wasserstoff, C₁ bis C₁₂-Alkyl, vorzugsweise Methyl, Halogen, vorzugsweise Chlor und/oder Brom
- q: jeweils unabhängig voneinander 0, 1 oder 2,
- p: 1 oder 0 sind, und
- R⁷ und R⁸: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- r: eine ganze Zahl von 4 bis 7, bevorzugt 4 oder 5 bedeuten, mit der Maßgabe, dass an mindestens einem Atom X¹, R⁷ und R⁸ gleichzeitig Alkyl sind.

Für die Herstellung der erfindungsgemäßen (Co)polycarbonate wird als Diphenol abgeleitet von Formel (V) bevorzugt 1,1-Bis-(4-hydroxyphenyl)-3,3,5-timethylcyclohexan (Bisphenol TMC) eingesetzt.

Für die Herstellung der erfindungsgemäß zu verwendenden (Co)polycarbonate geeignete Diphenole der Formel (VI) sind beispielsweise Hydrochinon, Resorcin, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte weitere Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl-4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxy-phenyl)-2-propyl]-benzol.

Besonders bevorzugte Diphenole sind 2,2-Bis-(4-hydroxyphenyl)-propan (BPA), und 2,2-Bis-(3-methyl-4-hydroxyphenyl)-propan (Dimethyl-BPA).

Besonders bevorzugt sind (Co)polycarbonate aus Bisphenol A und Bisphenol TMC.

Es können die Diphenole einzeln oder als beliebige Mischungen eingesetzt werden. Die Diphenole sind literaturbekannt oder nach literaturbekannten Verfahren erhältlich.

Diese und weitere geeignete Diphenole sind kommerziell erhältlich und z.B. in "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben.

Besonders bevorzugt sind statistische Copolycarbonate enthaltend folgende Struktureinheiten (IX) und (X): 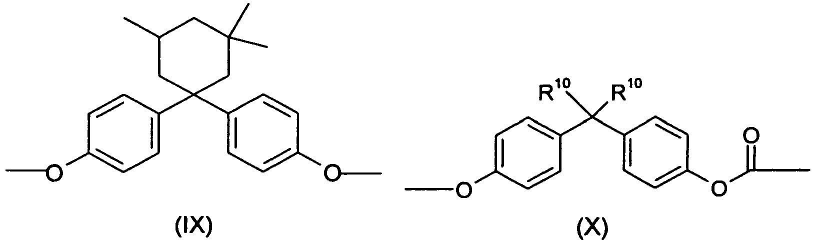 bei denen die Endgruppen wenigstens eine der folgenden Strukturen (XI) und (XII) aufweisen: 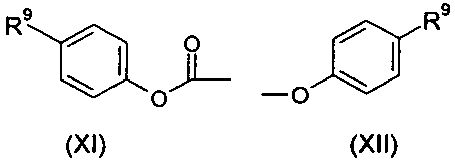 wobei
R⁹ und R¹⁰ unabhängig voneinander für Wasserstoff oder C₁-C₆-Alkyl stehen. Das Molverhältnis der Strukturen (IX) oder (X) ist von 0 Mol-% bis 100 Mol%, bevorzugt von 1 Mol-% bis 99 Mol-%, besonders bevorzugt von 2 Mol-% bis 98 Mo-1%, ganz besonders bevorzugt von 3 Mol-% bis 97 Mol-%, bezogen auf die Gesamtmolzahl von (IX) und (X).

Ganz besonders bevorzugt sind statistische Copolycarbonate in denen R¹⁰ für Methyl steht.

Für die Herstellung der thermoplastischen, aromatischen (Co)polycarbonate geeignete Kettenabbrecher sind beispielsweise Phenol, p-tert.-Butylphenol oder Cumylphenol.

Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen (Co)polycarbonate können in bekannter Weise verzweigt sein, und zwar vorzugsweise durch den Einbau von 0,05 bis 2,0 Mol-%, bezogen auf die Summe der eingesetzten Diphenole, an trifunktionellen oder mehr als trifunktionellen Verbindungen, beispielsweise solchen mit drei und mehr phenolischen Gruppen.

Die aromatischen (Co)polycarbonate haben in einer bevorzugten Ausführungsform der Erfindung ein gewichtsgemitteltes Molekulargewicht (M_{w}, gemessen z. B. durch GPC, Ultrazentrifuge oder Streulichtmessung) von mehr als 10 000 g·mol⁻¹, besonders bevorzugt 20 000 g·mol⁻¹ bis 300 000 g·mol⁻¹.

Die thermoplastischen, aromatischen (Co)polycarbonate können allein oder im beliebigen Gemisch eingesetzt werden, bevorzugt mit weiteren aromatischen Polycarbonaten.

Die verwendeten Diphenole, wie auch alle anderen der Synthese zugesetzten Chemikalien und Hilfsstoffe können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die verwendeten speziellen Polyacrylate können wärmeformbeständige Polymethacrylimide wie Poly(N-methylmethacrylimid (PMMI, auch als Pleximide bezeichnet; Röhm GmbH & Co KG, Darmstadt) oder Mischungen oder Copolymere daraus sein. Diese weisen eine hohe Wärmeformbeständigkeit bei sehr guter Transmission, sehr hoher Festigkeit und Steifigkeit und gute Witterungsbeständigkeit auf.

Die Zusammensetzung kann weitere handelsübliche Polymeradditive wie Flammschutzmittel, Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkylsulfonate oder Polyamid-haltige Polymere), sowie Farbstoffe und Pigmente in solchen Mengen enthalten, die die mechanischen Eigenschaften der Zusammensetzung nicht insoweit schädigen, dass das Zieleigenschaftsprofil (kein splitterndes Bruchversagen bei -10°C) nicht mehr erfüllt wird.

Als Flammschutzmittel werden vorzugsweise phosphorhaltige Flammschutzmittel eingesetzt, insbesondere ausgewählt aus den Gruppen der mono- und oligomeren Phosphor- und Phosphonsäureester, Phosphonatamine und Phosphazene, wobei auch Mischungen von mehreren Komponenten ausgewählt aus einer oder verschiedener dieser Gruppen als Flammschutzmittel zum Einsatz kommen können. Auch andere hier nicht speziell erwähnte, vorzugsweise halogenfreie Phosphorverbindungen können alleine oder in beliebiger Kombination mit anderen, vorzugsweise halogenfreien Phosphorverbindungen eingesetzt werden. Beispielsweise sind als Phosphorverbindungen geeignet: Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin-verbrücktes Di- bzw. Oligophosphat und Bisphenol A verbrücktes Di- bzw. Oligophosphat. Der Einsatz von oligomeren Phosphorsäureestern, die sich vom Bisphenol A ableiten, ist insbesondere bevorzugt. Als Flammschutzmittel geeignete Phosphorverbindungen sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001" oder in WO 99/55772, S. 15-25.

Als Thermostabilisator eignen sich bevorzugt Tris-(2,4-di-tert-butylphenyl)phosphit (Irgafos 168), Tetrakis(2,4-di-tert.-butylphenyl)[1,1biphenyl]-4,4'-diylbisphosphonit, Trisoctylphosphat, Octadecyl-3-(3,5-di-tertbutyl-4-hydroxyphenyl)propionat (Irganox 1076), Bis(2,4-dicumylphenyl)pentaerythritoldiphosphit (Doverphos S-9228-PC), Bis(2,6-di-tert.butyl-4-methylphenyl)pentaerythritoldiphosphit (ADK STAB PEP-36) oder Triphenylphosphin. Sie werden allein oder im Gemisch (z. B. Irganox B900 oder Doverphos S-9228-PC mit Irganox B900 bzw. Irganox 1076) eingesetzt.

Als Entformungsmitttel eignen sich bevorzugt Pentaerythrittetrastearat, Glycerinmonostearat, Stearylstearat oder Propoandiolmono- bzw. distearat. Sie werden allein oder im Gemisch eingesetzt.

Als UV-Stabilisatoren eignen sich bevorzugt 2-(2'-Hydroxyphenyl)benzotriazole, 2-Hydroxybenzophenone, Ester von substituierten und unsubstituierten Benzoesäuren, Acrylate, sterisch gehinderte Amine, Oxamide, 2-(2-Hydroxyphenyl)-1,3,5-triazine, besonders bevorzugt sind substituierte Benztriazole wie beispielsweise Tinuvin 360, Tinuvin 350, Tinuvin 234, Tinuvin 329 oder UV CGX 006 (Ciba).

Des weiteren können Farbmittel, wie organische Farbstoffe oder Pigmente oder anorganische Pigmente, IR-Absorber, einzeln, im Gemisch oder auch in Kombination mit Stabilisatoren, Glas(hohl)kugeln, anorganischen Füllstoffen oder organische oder anorganische Streupigmente zugesetzt werden.

Die erfindungsgemäßen thermoplastischen Formmassen werden hergestellt, indem man die jeweiligen Bestandteile in bekannter Weise vermischt und bei Temperaturen von 200°C bis 340°C, bevorzugt bei 240 bis 300°C, in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist ferner die Verwendung von Polyacrylaten enthaltend wenigstens eine Struktureinheit der allgemeinen Formel (III) in einem Verfahren zur Herstellung von (Co)polycarbonaten enthaltend mindestens einen Diphenolbaustein der Formel (I), 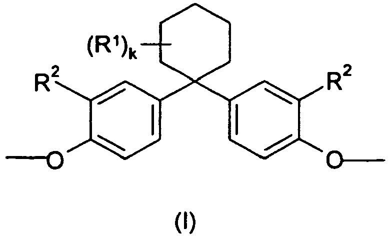 in der
R¹ und R² für Wasserstoff, C₁-C₄-Alkyl,
k für 0, 1, 2, 3 oder 4 stehen,
wobei das/die Polyacrylat(e) dem (Co)polycarbonat beigemengt wird.

Gegenstand der Erfindung sind ebenfalls Verfahren zur Herstellung der Formmassen und die Verwendung der Formmassen zur Herstellung von Formkörpern.

Die erfindungsgemäßen Formmassen können zur Herstellung von Formkörpern jeder Art verwendet werden. Diese können zum Beispiel durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Die erfindungsgemäßen (Co)polycarbonate und (Co)polycarbonat-Zusammensetzungen können auf üblichen Maschinen, beispielsweise auf Extrudern oder Spritzgussmaschinen, zu beliebigen Formkörpern bzw. Formteilen, zu Folien und Folienlaminate oder Platten oder Flaschen, in üblicher Weise verarbeitet werden.

Die so erhältlichen (Co)polycarbonate können zur Herstellung von Extrudaten (Platten, Folien und deren Laminate; z. B. für Kartenanwendungen und Rohre) und Formkörpern (Flaschen), insbesondere solchen zur Verwendung im transparenten Bereich, besonders im Bereich optischer Anwendungen wie z.B. Platten, Stegplatten, Verglasungen, Streu- oder Abdeckscheiben, Lampenabdeckungen, Kunststoffabdeckscheiben, Lichtleitelemente oder optische Datenspeicher, wie Audio-CD, CD-R(W), DVD, DVD-R(W), Minidiscs in ihren verschiedenen, nur lesbaren oder aber einmalbeschreibbaren, gegebenenfalls auch wiederholt beschreibbaren Ausführungsformen sowie Datenträger verwendet werden. Weiterhin können sie zur Herstellung von Gegenständen für den E/E und IT-Bereich verwendet werden.

Die (Co)polycarbonat-Zusammensetzungen werden insbesondere zur Herstellung von Compounds, Blends und Bauteilen verwendet, bei denen optische, thermische und mechanische Eigenschaften genutzt werden, wie beispielsweise Gehäuse, Gegenstände im E/E-Bereich, wie Stecker, Schalter, Platten, Lampenhalterungen, -abdeckungen, Automobilbereich wie Lampenfassungen und - abdeckungen, Verscheibungen, Medizinbereich wie Dialysatoren, Konnektoren, Hähne, Verpackung wie Flaschen, Behälter, Linsen, Kollimatoren, Leuchtdioden oder diffusor sheets für Displays und andere Anwendungen.

Die Extrudate und Formkörper bzw. Formteile aus den erfindungsgemäßen Polymeren sind ebenfalls Gegenstand der vorliegenden Anmeldung.

Weitere mögliche Anwendungen der erfindungsgemäßen (Co)polycarbonatformmassen sind: Sicherheitsscheiben, die bekanntlich in vielen Bereichen von Gebäuden, Fahrzeugen und Flugzeugen erforderlich sind, sowie als Schilde von Helmen, Herstellung von Extrusions- und Lösungsfolien für Displays oder Elektromotoren, auch Skifolien, Herstellung von Blaskörpern wie Wasserflaschen (siehe beispielsweise US-Patent 2 964 794), Herstellung von lichtdurchlässigen Platten, insbesondere von Hohlkammerplatten, beispielsweise zum Abdecken von Gebäuden wie Bahnhöfen, Gewächshäusern und Beleuchtungsanlagen, zur Herstellung von Ampelgehäusen oder Verkehrsschildern, zur Herstellung von Schaumstoffen (siehe beispielsweise DE-B 1 031 507), zur Herstellung von Fäden und Drähten (siehe beispielsweise DE-B 1 137 167 und DE-A 1 785 137), als transluzente Kunststoffe mit einem Gehalt an Glasfasern für lichttechnische Zwecke (siehe beispielsweise DE-A 1 554 020), zur Herstellung von Präzisionsspritzgussteilchen, wie beispielsweise Linsenhalterungen. Hierzu verwendet man (Co)polycarbonate mit einem Gehalt an Glasfasern, die gegebenenfalls zusätzlich etwa 1 bis 10 Gew.-% MoS₂, bezogen auf Gesamtgewicht, enthalten. Weiterhin optische Anwendungen, wie optische Speicher (CD, DVD), Schutzbrillen oder Linsen für Foto- und Filmkameras (siehe beispielsweise DE-A 2 701 173), Lichtübertragungsträger, insbesondere als Lichtleiterkabel (siehe beispielsweise EP-A1 0 089 801) als Elektroisolierstoffe für elekrische Leiter und für Steckergehäuse sowie Steckverbinder, als Trägermaterial für organische Fotoleiter, zur Herstellung von Leuchten, z.B. Scheinwerferlampen, als sogenannte "head-lamps" oder Streulichtscheiben oder Lampenabdeckungen, für medizinische Anwendungen, z.B. Oxygenatoren, Dialysatoren, für Lebensmittelanwendungen, wie z.B. Flaschen, Geschirr und Schokoladenformen, für Anwendungen im Automobilbereich, wo Kontakt zu Kraftstoffen und Schmiermitteln auftreten kann, für Sportartikel, wie z.B. Slalomstangen, für Haushaltsartikel, wie z.B. Küchenspülen und Briefkastengehäuse, für Gehäuse, wie z.B. Elektroverteilerschränke, Elektrogeräte, Haushaltsgeräte, Bauteile von Haushaltsartikeln, Elektro- und Elektronikgeräten, zur Herstellung von Motorrad- und Schutzhelmen, für Automobilteile, wie Verglasungen, Armaturenbretter, Karosserieteile und Stoßdämpfer. Die folgenden Beispiele dienen der weiteren Erläuterung der Erfindung.

### Beispiele

Folgende Rohstoffe wurden für die Herstellung der Compounds verwendet:
- A 2000 nat.: Copolycarbonat aus Bisphenol TMC und BPA der Bayer Material-Science AG, Leverkusen, mit einem MVR von 5,3 cm³/10 min (330 °C, 2,16 kg) und einer Vicat-Temperatur von 205 °C.
- Pleximid 8813: Poly(N-methacrylimid) der Fa. Röhm GmbH & Co KG, Darmstadt, mit einem MVR von 20 cm³/10 min (260 °C, 10 kg) und einer Vicat-Temperatur von 130 °C
- Pleximid 8817: Poly(N-methacrylimid) der Fa. Röhm GmbH & Co KG, Darmstadt, mit einem MVR von 1 cm³ /10 min (260 °C, 10 kg) und einer Vicat-Temperatur von 170 °C.

Mittels eines Mehrwellenextruders werden verschiedene Testmischungen der beiden Pleximid-Typen mit dem Basis-Copolycarbonat Apec 2000 hergestellt (siehe Tabelle 1).

Aus den so erhaltenen Blends werden Farbmusterplättchen (4 mm Dicke) abgespritzt und einer optischen Charakterisierung hinsichtlich Transmission, Trübung und YI (Yellowness Index) unterzogen. Die mechanischen und thermischen Eigenschaften der Blends werden zur Kontrolle mit Apec A 2000 ohne Additive den üblichen Tests wie z. B. Vicat-Temperatur, HDT, Zugversuch, E-Modul und Schlagzähigkeit unterzogen. Die Zusammenfassung aller Eigenschaften ist in der folgenden Tabelle 1 dem Vergleichsbeispiel (Probe ohne Additive) gegenübergestellt.

**Tabelle 1**

| | | 1* | 2 | 3 | 4 | 5* | 6 | 7 | 8 | 9* |
|---|---|---|---|---|---|---|---|---|---|---|
| A. 2000 nat | % | 100 | 99,9 | 99,75 | 99,5 | 98 | 99,9 | 99,75 | 99,5 | 98 |
| Pleximid 8813 | % | - | 0,1 | 0,25 | 0,5 | 2,0 | - | - | - | - |
| Pleximid 8817 | % | - | - | - | - | - | 0,1 | 0,25 | 0,5 | 2,0 |
| | | | | | | | | | | |

| Rheologie | | | | | | | | | | |
|---|---|---|---|---|---|---|---|---|---|---|
| Tg | °C | 205,8 | 206,0 | 206,9 | 205,0 | 205,4 | 206,4 | 204,5 | 206,1 | 206,3 |
| MVR 330°C/2, 16kg | ml/10min | 5,3 | 5,6 | 5,7 | 5,8 | 7,7 | 5,7 | 5,9 | 6 | 7,2 |
| IMVR20' 330°C/2,16kg | ml/10min | 5,4 | 6 | 5,8 | 7 | 8,8 | 5,6 | 6 | 6,9 | 8,1 |
| Delta MVR / IMVR20' | | 0,1 | 0,4 | 0,1 | 1,2 | 1,1 | -0,1 | 0,1 | 0,9 | 0,9 |
| Vicat VST B 120 | °C | 204,9 | 204,2 | 204,0 | 203,3 | 202,1 | 204,0 | 204,1 | 203,8 | 203,5 |
| HDT A | °C | 176,9 | 175,7 | 176,0 | 175,2 | 173,9 | 175,8 | 176,0 | 175,8 | 175,5 |
| HDT B | °C | 194,9 | 194,3 | 194,2 | 193,4 | 192,4 | 194,3 | 194,3 | 194,2 | 193,4 |
| Zugversuch | | | | | | | | | | |
| Streckspannung | N/mm² | 75 | 75 | 75 | 76 | 76 | 75 | 75 | 75 | 76 |
| Streckdehnung | % | 6,9 | 6,8 | 6,8 | 6,7 | 6,7 | 6,7 | 6,7 | 6,7 | 6,7 |
| Reißfestigkeit | N/mm² | 65 | 62 | 61 | 67 | 67 | 62 | 66 | 68 | 68 |
| Reißdehnung | % | 94 | 92 | 91 | 96 | 99 | 91 | 95 | 97 | 100 |
| E-Modul | N/mm² | 2513 | 2520 | 2518 | 2508 | 2568 | 2531 | 2560 | 2541 | 2537 |
| ISO 180/4A+Steilabfall | | | | | | | | | | |
| RT | kJ/m² | 6s | 7s | 7s | 7s | 6s | 7s | 7s | 7s | 6s |
| Aussehen 4mm FMP | | klar transp. | klar transp. | klar transp. | klar transp. | leicht trübe | klar transp. | klar transp. | klar transp. | leicht trübe |
| opt. Daten | | | | | | | | | | |
| Transmission | | 88,8 | 89,0 | 89,1 | 88,6 | - | 89,1 | 88,8 | 88,1 | - |
| Trübung | | 0,4 | 0,4 | 0,3 | 0,5 | - | 0,4 | 0,5 | 0,7 | - |
| Y.I. | | 6,4 | 6,0 | 6,1 | 6,8 | - | 5,9 | 6,8 | 8,0 | - |

| | | | | | | | | | | |
|---|---|---|---|---|---|---|---|---|---|---|
| * : Vergleichsbeispiel | | | | | | | | | | |

Man erkennt deutlich den positiven Einfuss der Pleximide auf die optischen Eigenschaften der Compounds, bei praktisch unveränderten mechanischen, thermischen und rheologischen Eigenschaften bis zu einem Gehalt von 0,25 Gew.% Pleximid im Apec. Bei Konzentration oberhalb von 0,25 Gew.% werden die optischen Eigenschaften dagegen wieder schlechter, was sich in einer Abnahme der Transmission und einer Zunahme der Trübung und YI zeigt. Dass Pleximide in Apec in einem ganz bestimmten Konzentrationsbereich positive optische Eigenschaften zulassen, war für den Fachmann nicht zu erwarten.

## Patentansprüche

1. Zusammensetzung bestehend aus
A) 99,98 bis 99,5 Gew.-Teilen (bezogen auf die Summe der Komponenten A + B) hochmolekularem, thermoplastischen, aromatischen (Co)polycarbonat mit Molekulargewicht M (Gewichtsmittel) von mindestens 10.000 g·mol⁻¹ das Struktureinheiten der Formel (I) enthält, 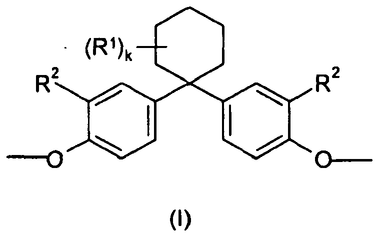 in der
R¹ und R² für Wasserstoff, C₁-C₄-Alkyl,
k für 0, 1, 2 , 3 oder 4 stehen ,
B) 0,02 bis 0,5 Gew.-Teilen (bezogen auf die Summe der Komponenten A + B) eines oder mehrerer spezieller Polyacrylate enthaltend wenigstens eine Struktureinheit der allgemeinen Formel **(III):** 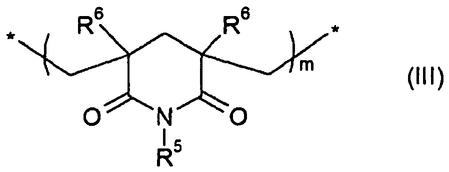
in der
R⁵ für Wasserstoff, C₁-C₈ Alkyl, bevorzugt Wasserstoff und Methyl, und
R⁶ für Wasserstoff, C₁-C₄ Alkyl, bevorzugt Methyl, stehen
m eine ganze Zahl und durch das Molekulargewicht bestimmt ist,

2. Zusammensetzung gemäß Anspruch 1, **dadurch gekennzeichnet, dass** das (Co)polycarbonat A) ein Molekulargewicht von 20.000 g·mol⁻¹ bis 300.000 g·mol⁻¹ hat.

3. Zusammensetzung gemäß Anspruch 1 oder 2, **dadurch gekennzeichnet, dass** die Komponente A) in Mengen von 99,9 bis 99,7 Gew.-Teile und Komponente B) in Mengen von 0, 1 bis 0,3 Gew.-Teile (bezogen auf die Summe der Komponenten A + B) verwendet wird.

4. Zusammensetzung gemäß einem der voranstehenden Ansprüche, **dadurch gekennzeichnet, dass** weitere Additive wie UV-Absorber, Entformungshilfsmittel oder Thermostabilisatoren in den Mengen von jeweils 50 bis 5000 Gew.-ppm bezogen auf die Summe der Komponenten A + B enthalten sind.

5. Zusammensetzung gemäß einem der voranstehenden Ansprüche, wobei Struktureinheiten der Formel (I) folgende Struktur (IX) aufweisen

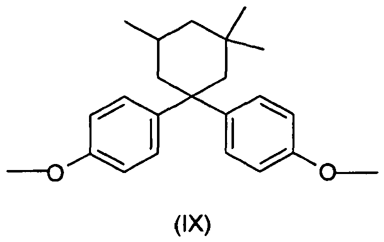

6. Zusammensetzung gemäß einem der voranstehenden Ansprüche, wobei das (Co)polycarbonat ein statistisches Copolycarbonat enthaltend folgende Struktureinheiten (IX) und (X) ist: 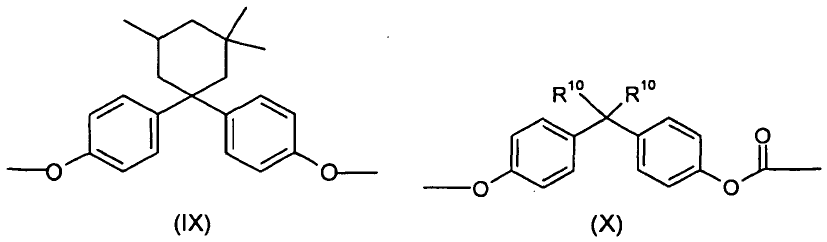 und die Endgruppen wenigstens eine der folgenden Strukturen (XI) und (XII) aufweisen: 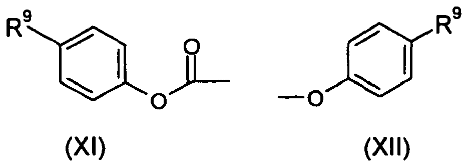 wobei
R⁹ und R¹⁰ unabhängig voneinander für Wasserstoff oder C₁-C₆-Alkyl stehen.

7. Zusammensetzung gemäß Anspruch 6, wobei R⁹ für *t*-Butyl oder Wasserstoff und R¹⁰ für Methyl steht und das Molverhältnis der Strukturen (IX) oder (X) von 2 Mol-% bis 98 Mol-% bezogen auf die Gesamtmolzahl von (IX) und (X) ist und die Summe der Strukturen (IX) und (X) 100 Mol-% ergibt.

8. Verfahren zur Herstellung der Zusammensetzung gemäß Anspruch 1 bis 7, in dem die Bestandteile vermischt und bei erhöhter Temperatur schmelzcompoundiert bzw. schmelzextrudiert werden.

9. Verwendung eines oder mehrerer Polyacrylate enthaltend wenigstens eine Struktureinheit der allgemeinen Formel (III) gemäß Anspruch 1 in einem Verfahren zur Herstellung von Copolycarbonaten enthaltend mindestens einen Diphenolbaustein der Formel (I), 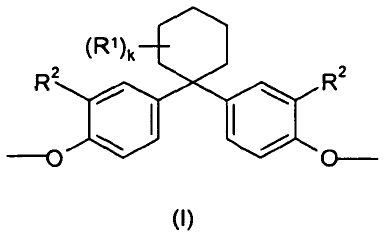 in der
R¹ und R² für Wasserstoff, C₁-C₄-Alkyl,
k für 0, 1, 2, 3 oder 4 stehen,
wobei das/die Polyacrylat(e) dem Copolycarbonat beigemengt wird.

10. Verwendung eines oder mehrerer Polyacrylate gemäß Anspruch 9, **dadurch gekennzeichnet, dass** die Bestandteile vermischt und schmelzcompoundiert oder schmelzextrudiert werden.

11. Verwendung von Zusammensetzungen gemäß Anspruch 1 bis 7 zur Herstellung von Formteilen.

12. Formteile erhältlich aus Zusammensetzungen gemäß Anspruch 1 bis 7.

## Claims

1. Composition composed of
A) from 99.98 to 99.5 parts by weight (based on the entirety of components A + B) of high-molecular-weight, thermoplastic, aromatic (co)polycarbonate with molar mass M (weight average) of at least 10 000 g·mol⁻¹ which comprises structural units of the formula (I) 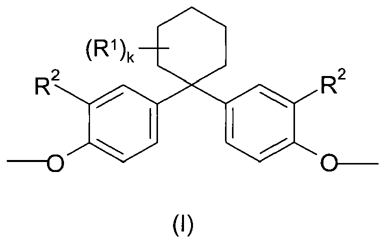 in which
R¹ and R² are hydrogen, C₁-C₄-alkyl,
k is 0, 1, 2, 3 or 4,
B) from 0.02 to 0.5 part by weight (based on the entirety of components A + B) of one or more specific polyacrylates comprising at least one structural unit of the general formula (III): 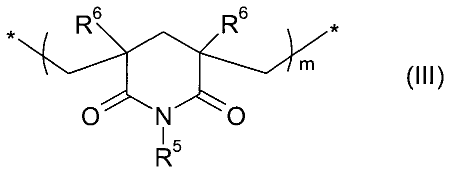
in which
R⁵ is hydrogen, C₁-C₈ alkyl, preferably hydrogen and methyl, and
R⁶ is hydrogen, C₁-C₄ alkyl, preferably methyl,
m is an integer determined via the molecular weight.

2. Composition according to Claim 1, **characterized in that** the molar mass of the (co)polycarbonate A) is from 20 000 g·mol⁻¹ to 300 000 g·mol⁻¹.

3. Composition according to Claim 1 or 2, **characterized in that** the amounts used of component A) are from 99.9 to 99.7 parts by weight, and the amounts used of component B) are from 0.1 to 0.3 part by weight (based on the entirety of components A + B).

4. Composition according to any of the preceding claims, **characterized in that** the respective amounts present of further additives, such as UV absorbers, mold-release auxiliaries, or heat stabilizers, are from 50 to 5000 ppm by weight, based on the entirety of components A + B.

5. Composition according to any of the preceding claims, wherein structural units of the formula (I) have the following structure (IX)

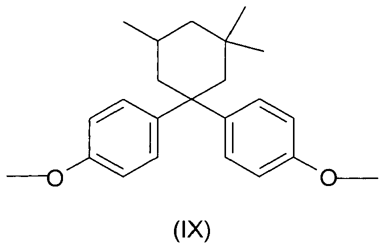

6. Composition according to any of the preceding claims, where the (co)polycarbonate is a random copolycarbonate comprising the following structural units (IX) and (X): 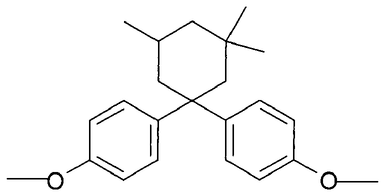 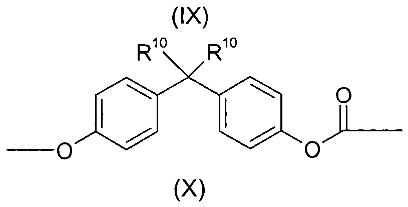 and the terminal groups have at least one of the following structures (XI) and (XII): 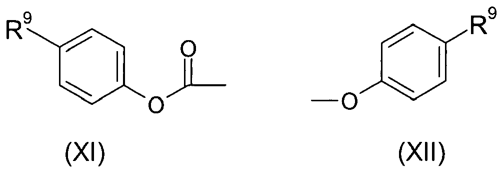 where
R⁹ and R¹⁰ are mutually independently hydrogen or C₁-C₆-alkyl.

7. Composition according to Claim 6, where R⁹ is tert-butyl or hydrogen and R¹⁰ is methyl, and the molar ratio of the structures (IX) or (X) is from 2 mol% to 98 mol%, based on the total number of moles of (IX) and (X), and the entirety of the structures (IX) and (X) gives 100 mol%.

8. Process for producing the composition according to any of Claims 1 to 7, by mixing the constituents and, at an elevated temperature, compounding them in the melt or, respectively, extruding them in the melt.

9. Use of one or more polyacrylates comprising at least one structural unit of the general formula (III) according to Claim 1 in a process for producing copolycarbonates comprising at least one diphenol unit of the formula (I), 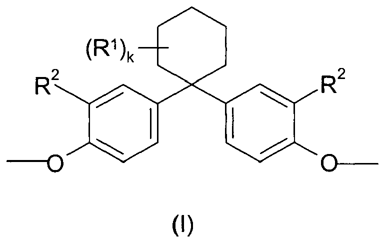 in which
R¹ and R² are hydrogen, C₁-C₄-alkyl,
k is 0, 1, 2, 3 or 4,
where the polyacrylate(s) is/are admixed with the copolycarbonate.

10. Use of one or more polyacrylates according to Claim 9, **characterized in that** the constituents are mixed and compounded in the melt or extruded in the melt.

11. Use of compositions according to any of Claims 1 to 7 for producing moldings.

12. Moldings obtainable from compositions according to any of Claims 1 to 7.

## Revendications

1. Composition, constituée par :
A) 99,98 à 99,5 parties en poids (par rapport à la somme des composants A + B) de (co)polycarbonate de haut poids moléculaire, thermoplastique, aromatique présentant un poids moléculaire M (moyenne pondérale) d'au moins 10 000 g·mole⁻¹ qui contient des unités de structure de formule (I), 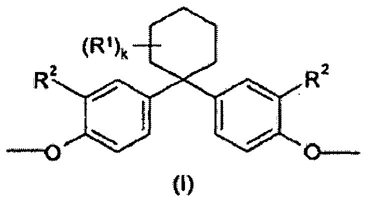 dans laquelle
R¹ et R² représentent hydrogène, C₁-C₄-alkyle,
k vaut 0, 1, 2, 3 ou 4,
B) 0,02 à 0,5 parties en poids (par rapport à la somme des composants A + B) d'un ou de plusieurs polyacrylates particuliers, contenant au moins une unité de structure de formule générale (III) : 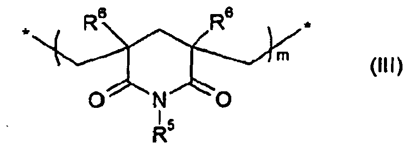 dans laquelle
R⁵ représente hydrogène, C₁-C₈-alkyle, de préférence hydrogène et méthyle, et
R⁶ représente hydrogène, C₁-C₄-alkyle, de préférence méthyle, et
m est un nombre entier, déterminé par le poids moléculaire.

2. Composition selon la revendication 1, **caractérisée en ce que** le (co)polycarbonate A) présente un poids moléculaire de 20 000 g·mole⁻¹ à 300 000 g·mole⁻¹.

3. Composition selon la revendication 1 ou 2, **caractérisée en ce que** le composant A) est utilisé en des quantités de 99,9 à 99,7 parties en poids et le composant B) en des quantités de 0,1 à 0,3 partie en poids (par rapport à la somme des composants A + B).

4. Composition selon l'une quelconque des revendications précédentes, **caractérisée en ce qu'**elle contient d'autres additifs, tels que des absorbants des UV, des adjuvants de démoulage ou des thermostabilisants en des quantités à chaque fois de 50 à 5000 ppm en poids en poids par rapport à la somme des composants A + B.

5. Composition selon l'une quelconque des revendications précédentes, les unités de structure de formule (I) présentant la structure suivante (IX)

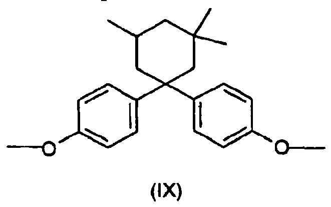

6. Composition selon l'une quelconque des revendications précédentes, le (co)polycarbonate étant un copolycarbonate statistique contenant les unités de structure suivantes (IX) et (X) : 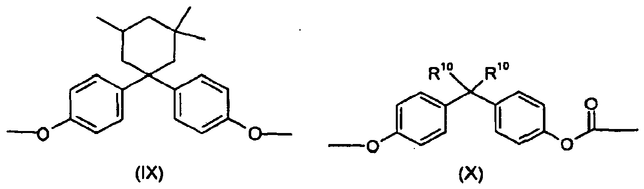 et les groupes terminaux présentant au moins une des structures suivantes (XI) et (XII) : 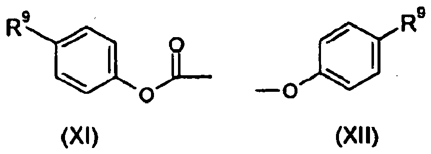 où
R⁹ et R¹⁰ représentent, indépendamment l'un de l'autre, hydrogène ou C₁-C₆-alkyle.

7. Composition selon la revendication 6, R⁹ représentant t-butyle ou hydrogène et R¹⁰ représentant méthyle et le rapport molaire des structures (IX) ou (X) valant 2 % en mole à 98 % en mole, par rapport au nombre total de moles de (IX) et (X), et la somme des structures (IX) et (X) valant 100% en mole.

8. Procédé pour la préparation de la composition selon la revendication 1 à 7, dans lequel les constituants sont mélangés et compoundés en masse fondue ou, selon le cas, extrudés en masse fondue à température élevée.

9. Utilisation d'un ou de plusieurs polyacrylates contenant au moins une unité de structure de formule générale (III) selon la revendication 1 dans un procédé pour la préparation de copolycarbonates contenant au moins un élément diphénol de formule (I), 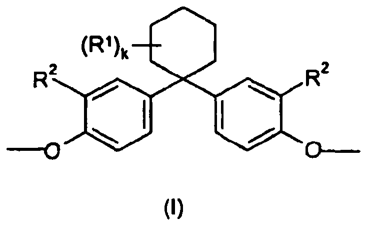 dans laquelle
R¹ et R² représentent hydrogène, C₁-C₄-alkyle,
k vaut 0, 1, 2, 3 ou 4,
le(s) polyacrylate(s) étant mélangé(s) au copolycarbonate.

10. Utilisation d'un ou de plusieurs polyacrylates selon la revendication 9, **caractérisée en ce que** les constituants sont mélangés et compoundés en masse fondue ou extrudés en masse fondue.

11. Utilisation de compositions selon la revendication 1 à 7 pour la fabrication de pièces moulées.

12. Pièces moulées pouvant être obtenues à partir de compositions selon la revendication 1 à 7.
